## Europäisches Patentamt

## European Patent Office

## Office européen des brevets

(19)

(11) Veröffentlichungsnummer: **0 221 296**
**B1**

(12) # EUROPÄISCHE PATENTSCHRIFT

(45) Veröffentlichungstag der Patentschrift:
**18.05.88**

(51) Int. Cl.⁴: **A 46 B 13/02,** A 46 B 15/00

(21) Anmeldenummer: **86112622.5**

(22) Anmeldetag: **23.03.85**

(54) **Elektro-Zahnbürste.**

(43) Veröffentlichungstag der Anmeldung:
**13.05.87 Patentblatt 87/20**

(45) Bekanntmachung des Hinweises auf die Patenterteilung:
**18.05.88 Patentblatt 88/20**

(84) Benannte Vertragsstaaten:
**AT BE CH DE FR GB IT LI LU NL SE**

(56) Entgegenhaltungen:
**EP-A-0 127 465**
**DE-C-3 117 160**
**US-A-4 253 212**

(73) Patentinhaber: **Blendax- Werke R. Schneider GmbH & Co., Rheinallee 88, D-6500 Mainz (DE)**

(72) Erfinder: **Mierau,Hans- Dieter,Prof.Dr., Friedrich-Ebert- Ring 27, D-8700 Würzburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 221 296 B1

## Beschreibung

Die vorliegende Erfindung betrifft eine elektrisch angetriebene Zahnbürste, die es dem Benutzer gestattet, den richtigen Anpressdruck der Bürste bei der Reinigung des Gebisses zu ermitteln und einzuhalten.

Ein wesentliches Kirterium für die opitmale Funktion einer Elektrozahnbürste ist die Einhaltung eines richtigen Anpressdrucks beim Gebrauch. Ist der Anpressdruck zu niedrig, so tritt keine ausreichende Reinigung ein. Ist hingegen der Druck zu hoch, wird das Zahnfleisch gereizt, was zu Zahnfleischblutungen und, unter Umständen, auf längere Dauer sogar zur Rückbildung des Zahnfleisches und Freilegung der Zahnhälse führen kann. Es ist daher eine wesentliche Voraussetzung für die Nützlichkeit des Zähneputzens, insbesondere bei Anwendung einer elektrischen Zahnbürste, daß mit dem richtigen Anpressdruck geputzt wird.

Die vorliegende Erfindung geht daher von der Aufgabenstellung aus, eine elektrisch angetriebene Zahnbürste zu schaffen, die es dem Benutzer gestattet, den geeigneten Anpressdruck beim Betrieb der Bürste einzustellen und während des Zähneputzens aufrecht zu erhalten.

Die Lösung dieser Aufgabe besteht darin, eine Zahnbürste mit elektrischem Antrieb an sich bekannter Konstruktion mit einer Vorrichtung zur optischen oder akustischen Anzeige des optimalen Anpressdrucks während des Zähneputzens zu versehen.

Diese Aufgabe wird dadurch gelöst, daß der Anpressdruck einer elektrischen Zahnbürste während ihrer Benutzung über die Stromaufnahme ihres Elektromotors ermittelt und die Einhaltung des zuvor definierten und eingespeicherten optimalen Bereiches kontrolliert wird. Zwischen der Stromaufnahme des Elektromotors und dem Anpressdruck bei Benutzung der Bürste besteht nämlich eine direkte Korrelation: Je höher der Anpressdruck, desto höher die Stromaufnahme und umgekehrt.

## Patentansprüche

Elektrisch angetriebene Zahnbürste, die eine Vorrichtung zur optischen oder akustischen Anzeige der Einhaltung des gespeicherten optimalen Anpressdrucks während des Zähneputzens aufweist, dadurch gekennzeichnet, daß der während des Zähneputzens ausgeübte Druck über die Stromaufnahme des Elektromotors der Elektrobürste gemessen und Abweichungen des in Korrelation mit einem definierten optimalen Druckbereich eingestellten Stromaufnahmewertes über einen Signalgeber dem Benutzer übermittelt werden.

## Claim

Electrically operated toothbrush provided with an appliance for the optical or acoustical indication of the keeping of the recorded optimal pressure range during cleaning of the teeth, characterized by the fact that the exerted pressure during the cleaning of the teeth is measured by the current consumption of the electric motor of the electrically operated brush, and that deviations of the adjusted current consumption value correlated with the defined optimal pressure range are transmitted to the user by a signal transmitter.

## Revendication

Brosse à dents électrique ayant un dispositif à l'indication optique ou acoustique concernant l'observation de l'optimale pression appliquée enregistrée pendant le brossage des dents, caracterisée par le fait que la pression appliquée pendant le brossage est mesurée à l'aide de la consommation de courant du moteur électrique de la brosse à dents électrique et que des différences de la valeur de la consommation de courant ajustée en corrélation avec l'optimale gamme de pression définie sont transmises à l'utilisateur par un signaleur.